Europäisches Patentamt

European Patent Office

Office européen des brevets

(11) Publication number: **0 328 119**
**A2**

# (12) EUROPEAN PATENT APPLICATION

(21) Application number: 89102262.6

(22) Date of filing: 09.02.89

(51) Int. Cl.⁴: **D01F 6/18 , D01F 1/10 , D01F 1/04 , C08K 3/22**

(30) Priority: 10.02.88 US 154690

(43) Date of publication of application:
16.08.89 Bulletin 89/33

(84) Designated Contracting States:
AT BE CH DE ES FR GB GR IT LI LU NL SE

(71) Applicant: BASF CORPORATION
P.O. Drawer "D"
Williamsburg Virginia 23187(US)

(72) Inventor: Patil, Arvind Shankar
505 York Street, Apt. 520
Williamsburg, VA 23185(US)
Inventor: Crouch, Frederick George
110 Charles River Landing
Williamsburg, VA 23185(US)
Inventor: Streetman, William Edward
21 Spring West
Williamsburg, VA 23185(US)

(74) Representative: Huber, Bernhard, Dipl.-Chem.
et al
Patentanwälte H. Weickmann, Dr. K. Fincke
F.A. Weickmann, B. Huber Dr. H. Liska, Dr. J.
Prechtel Möhlstrasse 22 Postfach 860 820
D-8000 München 86(DE)

(54) Stabilized polyacrylonitrile fibers and method of preparation.

(57) Polyacrylonitrile fibers are stabilized against ultraviolet light degradation by incorporating into the fibers, preferably during the wet spinning of the fibers, certain transparent inorganic pigments comprising iron oxide or iron oxide in combination with another metal, such as magnesium, zinc, or tin which are substantially free of soluble metal cations.

EP 0 328 119 A2

# STABILIZED POLYACRYLONITRILE FIBERS AND METHOD OF PREPARATION

## BACKGROUND OF THE INVENTION

A. Field of the Invention

The present invention relates to polyacrylonitrile fibers that exhibit excellent stability to ultraviolet light and a method of producing the stabilized polyacrylonitrile fibers during the wet spinning of the polyacrylonitrile fibers.

B. Description of the Prior art

Because fibers produced from polyacrylonitrile are more durable than cotton, have a wool-like appearance and feel, and are relatively inexpensive due to the low cost of acrylonitriles, they have found a wide variety of applications, especially in the textile field and interior decoration. For instance, they are the best alternative fabric to wool for sweaters. Also, they find particular application for craft yarns, pile fabrics, sheets, blouses, blankets, draperies, carpets, and rugs.

The term fiber as used herein includes fibers of extreme or indefinite length (i.e., filaments) and fibers of short length (i.e., staple). The term yarn, as used herein, means a continuous strand of fibers.

Polyacrylonitrile fibers must exhibit satisfactory resistance to degradation under conditions of use, if products made from the fibers are to find a lasting market. A lack of satisfactory resistance to degradation usually manifests itself as a partial or total loss of structural integrity, a darkening or discoloration of the product, a loss of flexibility or resilience, or a combination of the above phenomena. These phenomena are promoted or catalyzed by air (oxygen), heat, and light, particularly ultraviolet (UV) light.

It is well known that polyacrylonitrile fibers are subject to degradation under conditions of use, including degradation promoted by ultraviolet light.

To protect materials, whether natural of synthetic, such as polyacrylonitrile, ingredients, which can be collectively called stabilizers, are admixed with the materials to prevent or inhibit degradation. These stabilizers work in diverse and complex ways, such that a compound which stabilizes against heat and oxygen degradation in a material may not stabilize against ultraviolet light degradation in the same material, or vice versa. Furthermore, a compound which acts as a stabilizer against ultraviolet light degradation in one type of material may be relatively inactive in another type of material. Thus, compounds which are stabilizers are further classed as antioxidants, antiozonants, heat stabilizers, and ultraviolet light stabilizers, depending upon what type of activity and stabilization they demonstrate.

Various methods have been proposed to reduce degradation of polyacrylonitrile. For instance, ultraviolet light stabilizers classified as hindered amines (HALS), such as the piperidine derivatives disclosed in U.S. Patent 3,640,928, have been proposed for stabilizing synthetic polymers against photo- and thermo-degradation. Among the stabilizers disclosed therein is bis(2,2,6,6-tetramethylpiperidin-4-yl) sebacate, TINUVIN 770, which is available from Ciba-Geigy Corporation.

A problem associated with many of the stabilizers, particularly HALS compounds, is that they function by scavenging free radicals produced from the ultraviolet light and, thus, have a limited effective life. Also, many stabilizers, which are effective in stabilizing synthetic polymers, are not effective when the polymers containing the stabilizers are formed into fibers, as fibers, particularly fibers having a small denier, e.g., 1 to about 25 denier, have a relatively large surface area for attack by ultraviolet light. Furthermore, many of the known stabilizers are not commercially effective with all synthetic polymers, but have commercial effectiveness with a limited number of synthetic polymers.

Other compounds, including inorganic pigments such as titanium dioxide ($TiO_2$), have some effectiveness as UV stabilizers, but their resultant use results in dulling the surface of the material protected which in turn affects the aesthetics of the material. Also, another problem associated with the use of titanium dioxide as an ultraviolet light stabilizer is that, in the presence of oxygen, moisture, or ultraviolet light, the surfaces of the titanium dioxide can catalyze the oxidative degradation of polymers by a free radical process.

Because polyacrylonitrile fibers are, in many instances, utilized under particularly harsh conditions, it is therefore desirable to provide polyacrylonitrile fibers which are resistant to the effects of ultraviolet light degradation over extended periods of time.

## SUMMARY OF THE INVENTION

The surprising discovery has now been made that polyacrylonitrile fibers that possess excellent resistance to ultraviolet light degeneration can be prepared by incorporating into the polyacrylonitrile fibers transparent inorganic pigments comprising transparent iron oxide which are substantially free of soluble metal cations. The transparent inorganic pigments can be either iron oxide or iron oxide in combination with another metal, such as magnesium, zinc, or tin. The resulting fibers exhibit a transparent quality while at the same time are stabilized against deleterious effects of ultraviolet radiation. Furthermore, since the transparent inorganic pigments absorb energy from the ultraviolet light and dissipate the captured energy as thermal energy, the fibers are stabilized against ultraviolet degradation for extended periods of time.

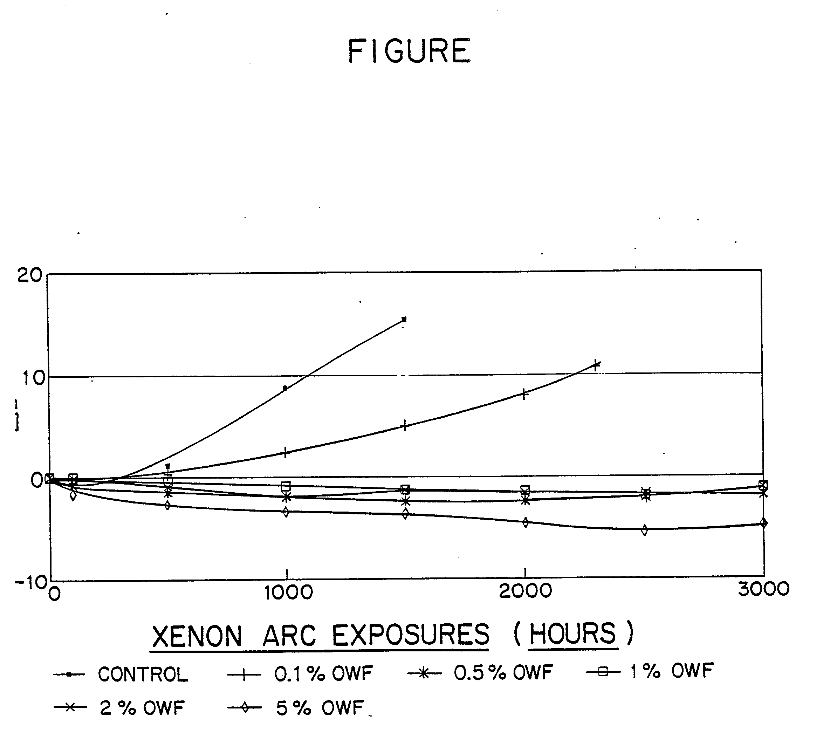

## BRIEF DESCRIPTION OF THE DRAWING

The FIGURE shows the results of transparent iron oxide as an ultraviolet stabilizer for polyacrylonitrile fibers.

## DESCRIPTION OF THE PREFERRED EMBODIMENTS

The term "polyacrylonitrile fiber", as used herein, means a fiber in which the fiber-forming substance is a synthetic polymer composed of at least 85 percent by weight acrylonitrile monomer units ($-CH_2-\underset{CN}{CH}-$). Up to 15 percent of the polymer can be comprised of a vinyl monomer which is copolymerizable with acrylonitrile such as methyl acrylate, methyl methacrylate, vinyl acetate (preferably up to 10% by weight), and vinyl derivatives containing sulfo or carboxyl groups.

Preferably, the polyacrylonitrile polymer has a weight average molecular weight in the range of 50,000 to about 5,000,000, and, more preferably, has a weight average molecular weight in the range of from about 80,000 to 120,000.

In some applications, it is preferable that the polymer comprise at least 95 percent by weight of acrylonitrile units.

The transparent pigments comprising iron oxide, which are suitable for use in the present invention, are either substantially free from soluble metal cations or any soluble metal cations contained therewith have been removed or deactivated. In any case, the pigments are substantially free of soluble metal cations. Iron oxide that is either found in nature as mineral deposits or manufactured synthetically normally have high concentrations of soluble metal cations such as antimony, barium, beryllium, cadmium, chromium, cobalt, copper, lead, manganese, mercury, nickel, selenium, thorium, tin, and zinc. It is necessary that these and other soluble metal cations be either removed or deactivated, as their presence in the polyacrylonitrile fibers will actually accelerate UV degradation. In other words, the polyacrylonitrile fibers will be more susceptible to degradation than if no iron oxide pigment stabilizer was added. Methods for the deactivation of the undesirable soluble metal cations are disclosed in United States Patent 4,348,240, which is assigned to the assignee of the present invention and hereby incorporated by reference.

Thus, the term "substantially free", as used herein, with reference to the transparent pigments, means that the level of soluble metal cations present, either through removal or deactivation, in the pigments is such that no appreciable degradation occurs in the polyacrylonitrile fibers due to the soluble metal cations. Preferably, the amount of soluble metal cations present in the pigments is less than 1 part per million. More preferably, the pigments are devoid of soluble metal cations.

The pigments of the present invention, such as $Fe_2O_3$, are transparent and, thus, have an average particle size which is smaller than the wavelength of light. Generally, transparent pigments comprising iron oxide, which have an average particle size less than 0.1 micron ($\mu$), are considered to be transparent because they transmit visible light. If the size of the pigments is too large, the pigment is unable to transmit visible light which has a wavelength from 400 nanometers to 700 nanometers. At the same time, the transparent iron oxide pigments are very effective in absorbing ultraviolet radiation of wavelengths between 300 nanometers and 400 nanometers. Ultraviolet radiation between these wavelengths has been found to be particularly detrimental to the stability of polyacrylonitrile fibers. Thus, the transparent iron oxide pigments provide excellent protection to the polyacrylonitrile fibers against ultraviolet light degradation while, at the same time, the polyacrylonitrile fibers have excellent transparency. In other words, the resulting stabilized polyacrylonitrile fiber offers a desirable and unexpected combination of qualities, aesthetics, and protection from ultraviolet light degradation.

A class of preferred iron oxide pigments for use in the present invention are $\alpha$-iron oxides having an orthorhombic bipyramidal crystal structure, such as geothite which has a formula FeO(OH) and a rhombohedral structure, such as hematite, which has a formula $Fe_2O_3$.

Another preferred class of iron oxide pigments which are suitable for use in the present invention are mixed crystal oxides of iron and either magnesium, zinc, or tin. These crystal types, which are transparent to light and do not impart delustering, are represented by the following formula $(MO)_x \cdot (Fe_2O_3)_y$, wherein M is selected from the group consisting of magnesium, zinc, and tin; x is an integer of 1 or 2; and y is an integer of 1. Procedures for preparing this class of transparent pigments are disclosed in U.S. Patent 4,292,294, which is assigned to the assignee of the present invention and is hereby incorporated by reference. Preferably, the crystal type of these pigments is a spinel.

When the iron oxide pigments of the present invention are heated to a temperature above 250° C, the pigments lose water of crystallization and become red in color. As the effectiveness of the iron oxide pigments is due primarily to the iron atoms, the conversion of the color from yellow to red does not diminish the effectiveness of the pigments as an ultraviolet light stabilizer.

Preferably, the iron oxide pigments of the present invention have an average primary particle size in the range of from about 0.01μ to about 0.5μ and, more preferably, from about 0.01μ to about 0.1μ. The term "primary particle size" as used herein means the smallest indivisible crystal size of a particle that can be detected by an electron microscope.

The amount of iron oxide pigment which is necessary for stabilization of the polyacrylonitrile fibers will vary over a wide range and, thus, there are no set parameters. Generally, an amount sufficient to stabilize the polyacrylonitrile fibers will be an amount in the range of from about 0.005 to about 5.0 weight percent of the polyacrylonitrile. More preferably, the amount will be from about 0.005 to about 1.0 percent by weight of polyacrylonitrile.

The denier of the fibers of the present invention will depend on the resulting application of the fibers. Because of the relatively large surface area of fibers having a denier from 1 to about 25, the iron oxide pigment finds particular application in these fibers.

It is essential that the transparent pigments be incorporated into the polyacrylonitrile fibers in a manner such that they remain substantially free of soluble metal cations. As previously stated, the presence of soluble metal cations in the pigments will enhance the degradation of the polyacrylonitrile fibers more than if no iron oxide stabilizer were present.

In order for the iron oxide pigments to achieve their optimum ultraviolet light stabilization effects, the pigments should be well dispersed in the polyacrylonitrile matrix of the fiber. Achievement of such a dispersion will occur by utilizing iron oxide pigments having the aforedescribed primary particles, which are sizes in the range of from about 0.01μ to about 0.5μ.

Procedures for preparing pigment dispersions which are suitable for use in the preparation of polyacrylonitrile polymers are known to persons skilled in the art. For instance, a suitable high shear mixing procedure is disclosed in U.S. Patent 3,565,850, which is hereby incorporated by reference. A preferred procedure of dispersing the iron oxide pigments and the polyacrylonitrile comprises first high shear mixing and then ball milling or sand milling the pigments and an acrylonitrile polymer in an aqueous zinc chloride solution in an amount sufficient to ensure the iron oxide pigments are reduced to the desired primary particle size and thereafter manufacturing the stabilized polyacrylonitrile fibers by procedures known to persons skilled in the art. Procedures for ball milling iron oxide pigments are disclosed in U.S. Patent 4,332,354, which is hereby incorporated by reference. In any case, whatever procedure is utilized for dispersing the iron oxide pigments in the acrylonitrile polymer, care should be exercised, as the oxide pigments tend to coagulate when placed in high concentrations of acidic salt solutions, and the use of many dispersants are not effective in reducing this coagulation.

A particularly preferred method for manufacturing the fibers in accordance with this invention is disclosed in U.S. Patent 2,983,571, which is hereby incorporated by reference. The method generally comprises extruding, preferably through a multi-hole spinnerette, an aqueous zinc chloride spinning solution containing acrylonitrile polymer and transparent iron oxide pigment substantially free of soluble metal cations into an aqueous coagulating bath containing zinc chloride. The aqueous zinc chloride solution which is extruded is made up of preferably about 55 to about 65 percent by weight zinc chloride in water in which is dissolved about 10 to about 14 percent by weight acrylonitrile polymer. More preferably, the aqueous zinc chloride solution contains about 60 percent by weight zinc chloride and about 12 percent by weight acrylonitrile polymer.

The concentration of zinc chloride in the coagulant bath is generally in the range of from about 25 to about 45 percent by weight in water, and the temperature of the bath is generally maintained between about 0°C and about 35°C. The direction of travel of the extruded filaments in the coagulation bath may be horizontal, downward, or upward.

The coagulated fibers, which contain the transparent pigment coincident to the fibers, are then washed, preferably by passing the fibers through multi-stage washing zones in which water flows counter-current to the moving fibers. Next, the washed fibers are preferably passed into stretching zones which are immersed in hot water. The overall stretch ratio is preferably between 8 and 14 times, and, more preferably, about 10 times.

The stretched fibers are then dried. The drying of the fibers preferably takes place between about 130°C and 160°C at high humidity conditions. Subsequent to the drying, the fibers can be cut into the appropriate length and also, if desired, may be crimped.

The transparent iron oxide pigment is preferably added to acrylonitrile polymer, prior to extrusion, by adding an aqueous iron oxide pigment dispersion, preferably about 5 percent by weight, to the acrylonitrile polymer by means of a mixing valve. In any case, it is important that whatever means utilized to prepare the stabilized fibers that the transparent iron oxide pigment not be solubilized, as to do so will produce solubilized iron ions which, as previously stated, will result in degrading the polyacrylonitrile fibers.

Another particularly desirable feature of the invention is that particle size of the iron oxide pigment does not result in plugging the holes of the spinnerette during the wet spinning of the polyacrylonitrile fibers due to the small particle size.

The following examples will serve to more comprehensively illustrate the principles of the invention, but are not intended to limit the bounds of the invention.

## EXAMPLE I

A dispersion was prepared containing 6.9% by weight transparent iron oxide in a 60% by weight zinc chloride solution. This dispersion was mixed with a spin solution comprising 10.7% by weight of polyacrylonitrile dissolved in 60% by weight zinc chloride solution in varying amounts to produce 5000 g mixtures. The mixtures were then mixed using a Hobart Mixer before the solution was spun into fibers. The amounts of dispersion mixed with the spin solution were varied such that the final fibers contained 5%, 2%, 1%, 0.5%, 0.1%, or 0% (control) transparent iron oxide based on the weight of the fiber (owf). The equipment used for spinning the fibers was a scaled down version of the equipment disclosed in United States Patent 2,983,571.

The resulting fibers were crimped, cut into a 2 inch staple, carded, and made into fleece. The fleeces were mounted in a sample holder and exposed to an Atlas Xenon Arc Weatherometer, Ci65 Model, using 0.35 watt/m² irradiance and a continuous light cycle using a Borosilicate inner and outer filter on the Xenon Arc Weatherometer. The black panel temperature was 63°C, and the relative humidity in the chamber was 24%. The color change in the sample was measured by a McBeth Colorimeter after every 100 hours of exposure, and the Hunter $\Delta L$, $\Delta A$, $\Delta B$, and $\Delta E$ (total color difference) was calculated using unexposed samples in each case as a standard. $\Delta B$, which is a measure of yellowing of the fleece, shows the effectiveness of stabilizer in minimizing the yellowing due to light exposure. Higher $\Delta B$ signifies more yellowing due to the action of light. Those knowledgeable in the art will also know that Xenon Arc lamp mimics the action of the sunlight, and has approximately the same energy spectrum of sunlight.

The Figure shows the yellowing of the fiber ($\Delta B$) versus the number of hours of exposure in the Weatherometer. Addition of as little as 0.1% owf of transparent iron oxide retarded the yellowing of the polyacrylonitrile fiber and the addition of 0.5% owf to the fiber maintains the color of the fiber up to and beyond 3000 hours. From experience, an exposure of 3000 hours in this Atlas Xenon Arc Weatherometer is equivalent to at least three years of outdoor exposure.

## EXAMPLE II

Transparent iron oxide was incorporated into polyacrylonitrile fibers using pilot plant apparatus. The polyacrylonitrile comprised both a homopolymer of acrylonitrile monomer units and a copolymer comprising

5

acrylonitrile monomer units, 6% monomer units of methyl acrylate, and 1.1% monomer units of 2-acrylamido-2-methylpropane-sulfonic acid. Dispersions containing 6.98% by weight of either a transparent iron oxide pigment or a transparent zinc-iron oxide spinel pigment were prepared using procedures similar to the procedures set forth in Example I.

Unlike Example I, where the spin solutions and pigment dispersions were premixed, the pigment dispersions were separately metered and mixed in line with the spin solutions in a static mixer called a ISG mixer before being pumped through a spinnerette. The pigment dispersions were pumped at a rate proportional to the pigment concentration in order to achieve the desired amounts in the fibers. For copolymers, a 2d/f fiber was produced and for homopolymers, a 3d/f fiber was produced.

Some of the iron oxide pigment dispersions also contained conventional organic pigments.

The resulting fibers were crimped, cut into a 2 inch staple, carded, and made into fleece. The fleeces were exposed in a Xenon Arc Weatherometer using a Ci65 Model of Atlas with a 0.35 watt/m$^2$ irradiance, a continuous light cycle, a black panel temperature of 63° C, and a relative humidity of 24%. The composition of the fibers and their ΔB values are set forth below in Table I.

TABLE I

| XENON ARC WEATHEROMETER EXPOSURES | | | | |
|---|---|---|---|---|
| FIBER | RESULT | | | |
| (Pigment + % owf Stabilizer) | HOMOPOLYMER | | COPOLYMER | |
| | Hrs. | ΔB | Hrs. | ΔB |
| Bone - Control (no stabilizer) | 900 | 2.6 | 1,000 | 2.3 |
| Bone + 0.1% Transparent Iron oxide | 900 | -3.6 | 900 | -2.3 |
| Bone + 0.5% Transparent Iron Oxide | 900 | -0.7 | 900 | -2.5 |
| Bone + 0.5% Transparent Zinc-Iron Oxide Spinel | 900 | -1.4 | 900 | -1.1 |
| Bone + 0.1% Transparent Zinc-Iron Oxide Spinel | 900 | -2.2 | 1,000 | -0.3 |
| Beige - Control (no stabilizer) | 900 | -0.9 | 1,000 | -0.5 |
| Beige + Transparent Iron Oxide Pigment | 900 | 0.8 | 1,000 | -2.5 |
| Grey - Control (no stabilizer) | 900 | 3.6 | 1,000 | 2.2 |
| Grey + Transparent Iron Oxide Pigment | 900 | 0.3 | 1,000 | 1.0 |
| Blue - Control (no stabilizer) | 900 | 2.7 | 800 | 1.2 |
| Blue + 0.1% Transparent Iron Oxide Pigment | 800 | 2.5 | 800 | 0.9 |
| Blue + 0.1% Transparent Zinc-Iron Oxide Spinel | 800 | 1.6 | 800 | 1.5 |

The results show that the transparent iron oxides and transparent zinc-iron oxide spinels minimize the yellowing of the fiber, as indicated by lower (including negative) ΔB values.

EXAMPLE III

Fabrics were evaluated by cutting the above fibers into a staple, carding, drawing, and roving the fibers to produce a yarn having the following properties:
Count ~ 18/1 cotton count, single twist multiples (TM) ~ 3.53 (15 twist per inch (TPI)), and ply TM ~ 4.57 (13.7 TPI)

The yarn was woven into fabrics using a warp with 72 ends per inch and a filling with 36 ends per inch in a reed using a plain weave configuration. The fabric weighed approximately 9.4 oz./square yard. The fabric was then finished by 1) scouring, 2) drying, 3) padding with topical finish, 4) drying, and 5) framing to width at a heatsetting temperature of from about 300° to about 325° F.

The fabrics were then exposed in an accelerated outdoor test facility in Arizona, where a set of rotating parabolic mirrors track the sunlight and focus it on the fabrics. The test, which was run by Southern Florida Test Service Inc., is called Sun$^{10}$. The samples were exposed to 210 megajoules/meter$^2$ (MJ/m$^2$) of UV radiation as measured between 290-400 nm wavelength. This amount of radiation is equivalent to about 1.5 years of regular exposure in Arizona conditions. The results of these tests are shown in Table II.

## TABLE II

| EXPOSURES IN SUN[10] TESTS (210 MJ/m$^2$) | |
|---|---|
| FABRIC | RESULTS ($\Delta$B) |
| Beige - Control (no stabilizer) | 4.0 |
| Beige With Transparent Iron Oxide Pigment | 1.9 |
| Grey - Control (no stabilizer) | 5.3 |
| Grey With Transparent Zinc-Iron Oxide Spinel | 3.2 |
| Blue - Control (no stabilizer) | 8.5 |
| Blue With Transparent Iron Oxide Pigment | 7.9 |
| Bone - Control (no stabilizer) | 3 |
| Bone With Transparent Iron Oxide Pigment | -1.9 |

The results demonstrate the effectiveness of the stabilizers of the invention in protecting the polyacrylonitrile fiber from ultraviolet light degradation.

This invention is not limited to the above-described specific embodiments thereof; it must be understood, therefore, that the detail involved in the descriptions of the specific embodiments is presented for the purpose of illustration only, and that reasonable variations and modifications, which will be apparent to those skilled in the art, can be made in this invention without departing from the spirit and scope thereof.

## Claims

1. A stabilized polyacrylonitrile fiber comprising:
(a) polyacrylonitrile; and,
(b) a stabilization amount of an ultraviolet light stabilizer which is substantially free of soluble metal cations and is selected from the group consisting of
(i) a transparent iron oxide pigment;
(ii) a transparent mixed crystal oxide of iron represented by the formula
$(MO)_x.(Fe_2O_3)$
wherein
M is selected from the group consisting of magnesium, zinc, and tin; and
x is an integer of 1 or 2; and,
(iii) mixtures of (i) and (ii).

2. The fiber recited in Claim 1 wherein said stabilizer has an average particle size of less than 0.1 $\mu$.

3. The fiber recited in Claim 1 or 2 wherein said transparent iron oxide pigment is $Fe_2O_3$.

4. The fiber recited in Claim 1 or 2 wherein said transparent iron oxide pigment is an $\alpha$-iron oxide having either an orthorhombic bipyramidal or a rhombohedral crystal structure.

5. The fiber recited in Claim 4 wherein said transparent iron oxide pigment is $FeO(OH)$.

6. The fiber recited in Claim 1 or 2 wherein said transparent mixed crystal oxide is $(ZnO)\cdot(Fe_2O_3)$.

7. The fiber recited in Claim 6 wherein said transparent mixed crystal of iron oxide has a spinel structure.

8. The fiber recited in one of the preceding claims wherein said stabilizer has an average particle size in the range of from about 0.01 $\mu$ to about 0.5 $\mu$.

9. The fiber recited in one of the preceding claims wherein said stabilizer is present in an amount in the range of from about 0.005 to about 1.0 percent by weight of polyacrylonitrile.

10. The fiber recited in one of the preceding claims wherein said fiber has a denier in the range of from about 1 to about 25.

11. The fiber recited in one of the preceding claims wherein said stabilizer is devoid of active soluble metal cations.

12. The fiber recited in one of the preceding claims wherein said polyacrylonitrile contains at least 95% by weight of acrylonitrile units.

13. The fiber recited in one of claims 1 to 11 wherein said polyacrylonitrile contains up to 10% by weight methyl acrylate, methyl methacrylate, or vinyl acetate monomer units.

14. The fiber recited in Claim 12 or 13 wherein said polyacrylonitrile has a weight average molecular weight in the range of from about 50,000 to about 5,000,000.

15. A fabric comprising the fibers recited in Claim 11.

16. A yarn comprising the fibers recited in Claim 11.

17. A method of preparing a stabilized polyacrylonitrile fiber comprising:

(a) mixing with polyacrylonitrile a stabilizing amount of an ultraviolet light stabilizer which is substantially free of soluble metal cations and is selected from the group consisting of

(i) a transparent iron oxide pigment;

(ii) a transparent mixed crystal oxide of iron represented by the formula

$(MO)_x \cdot (Fe_2O_3)$

wherein

M is selected from the group consisting of magnesium, zinc, and tin; and

x is an integer of 1 or 2; and

(iii) mixtures of (i) and (ii); (b) extruding the mixture of step (a) to form one or more fibers;

(c) washing the fibers;

(d) stretching the fibers; and

(e) drying the fibers.

18. The method recited in Claim 17 wherein said stabilizer has an average particle size of less than 0.1 $\mu$.

19. The method recited in Claim 17 or 18 wherein said transparent iron oxide pigment is $Fe_2O_3$.

20. The method recited in Claim 17 or 18 wherein said transparent iron oxide pigment is an $\alpha$-iron oxide having either an orthorhombic bipyramidal or a rhombohedral crystal structure.

21. The method recited in Claim 20 wherein said transparent iron oxide pigment is FeO(OH).

22. The method recited in Claim 17 or 18 wherein said transparent mixed crystal oxide of iron is $(ZnO) \cdot (Fe_2O_3)$.

23. The fiber recited in Claim 22 wherein said transparent mixed crystal oxide of iron has a spinel structure.

24. The method recited in one of claims 17 to 23 wherein said stabilizer has an average particle size in the range of from about 0.01 $\mu$ to about 0.5 $\mu$.

25. The method recited in one of Claims 17 to 24 wherein said stabilizer is present in an amount in the range of from about 0.005 to about 1.0 percent by weight of polyacrylonitrile.

26. The method recited in one of Claims 17 to 25 wherein said stabilizer is devoid of active soluble metal cations.

27. The method recited in one of Claims 17 to 26 wherein said polyacrylonitrile contains at least 95 percent by weight of acrylonitrile units.

28. The method recited in one of Claims 17 to 26 wherein said polyacrylonitrile contains up to 10% by weight methyl acrylate, methyl methacrylate, or vinyl acetate monomer units.

29. A yarn containing the fibers prepared in accordance with one of Claims 17 to 28.

30. A method of stabilizing one or more polyacrylonitrile fibers from ultraviolet degradation comprising: incorporating into said polyacrylonitrile fibers a stabilization amount of an ultraviolet light stabilizer which is substantially free of soluble metal cations and is selected from the group consisting of

(i) a transparent iron oxide pigment;

(ii) a transparent mixed crystal oxide of iron represented by the formula

$(MO)_x \cdot (Fe_2O_3)$

wherein

M is selected from the group consisting of magnesium, zinc, and tin; and

x is an integer of 1 or 2; and

(iii) mixtures of (i) and (ii).

# FIGURE

XENON ARC EXPOSURES ( HOURS )

CONTROL    0.1 % OWF    0.5 % OWF    1 % OWF

2 % OWF    5 % OWF